# EUROPEAN PATENT SPECIFICATION

(11) **EP 3 018 100 B1**
(45) Date of publication and mention of the grant of the patent: **18.04.2018**
(21) Application number: 13888724.5
(22) Date of filing: 05.07.2013
(51) Int. Cl.: B01D 53/50, B01D 53/77, B01D 53/96, B01D 1/16, B01D 1/20, C02F 1/04, C02F 1/12, C02F 1/44, C02F 103/18

(54) **WATER TREATMENT SYSTEM AND METHOD**
WASSERBEHANDLUNGSSYSTEM UND VERFAHREN
SYSTÈME ET PROCÉDÉ DE TRAITEMENT D'EAU

(43) Date of publication of application: 11.05.2016
(73) Proprietor: Mitsubishi Heavy Industries, Ltd., Tokyo 108-8215 (JP)
(72) Inventor: UKAI, Nobuyuki, Tokyo 108-8215 (JP); OKINO, Susumu, Tokyo 108-8215 (JP); EDA, Masayuki, Tokyo 108-8215 (JP); KAGAWA, Seiji, Tokyo 108-8215 (JP); SUZUKI, Hideo, Tokyo 108-8215 (JP); NAKASHOJI, Hiroshi, Tokyo 108-8215 (JP); USHIKU, Tetsu, Tokyo 108-8215 (JP); YOSHIOKA, Shigeru, Tokyo 108-8215 (JP)
(74) Representative: Studio Torta S.p.A.
(86) International application number: PCT/JP2013/068554
(87) International publication number: WO 2015/001678

(56) References cited:
- JP-A- 2010 089 071
- JP-A- 2012 200 721
- US-A1- 2011 262 331
- US-A1- 2011 268 637
- US-A1- 2012 240 761

## Description

### Field

The present invention relates to a water treatment system and a water treatment method for effluent generated, for example, in a boiler plant or a chemical plant facility.

### Background

For example, in a process plant like a power generation plant or a chemical plant, effluent is generated, for example, from a boiler, a reactor, a wet-type cooler for a steam condenser, or a water treatment device. Various types of treatment devices have been suggested to perform treatment of such effluent, but any of those devices can only be implemented with an increase in costs. To address such a problem, a suggestion has been made on a boiler with an effluent treatment device which is characterized in that cooling water (blow water) in a cooler of the boiler is sprayed into a flue gas duct as a mist of droplets having a diameter of 20 to 120 micron, thereby neutralizing the alkaline blow water (Patent Literature 1).

There has also been a suggestion on an effluent treatment device in which effluent is sprayed into a flue gas duct, thereby increasing the amount of effluent that can be vaporized (Patent Literature 2).

### Citation List

### Patent Literature

Patent Literature 1: Japanese Patent Application Laid-open No. 8-47693
Patent Literature 2: Japanese Patent Application Laid-open No. 2001-29939
Patent Literature 3: US2012/240761
Patent Literature 4: US2011/268637
Patent Literature 5: US 2011/262331

Summary

### Technical Problem

However, the invention according to Patent Literature 1 can perform treatment of effluent with ease and at low costs, but raises the problem in that an increase in the amount of effluent relative to the heat energy (the temperature and the flow rate) of the flue gas may cause an increase in the energy required to vaporize the effluent with the result that the effluent cannot be treated.

On the other hand, the invention of Patent Literature 2 makes it possible to reduce the amount of effluent by a concentrating device, but raises the problem of causing degradation in the output of the steam turbine because the concentrating device bleeds part of the steam generated in the boiler.

Therefore, the emergence of such a technique is desired which can efficiently perform treatment of effluent at low costs without degradation in boiler efficiency, the effluent being generated in a process plant facility such as a power generation plant or a chemical plant, for example, from a boiler, a reactor, a wet-type cooler of a steam condenser, or a water treatment device.

In view of the aforementioned problems, it is an object of the present invention to provide a water treatment system and a water treatment method for effluent generated in a plant facility.

### Solution to Problem

Inorder to solve the above-problems, there is provided a water treatment system including the features of claim 1.

According to a preferred aspect of the present invention, there is provided the water treatment system according to claim 1, further including a desalination device that removes salt content present in the effluent, wherein the spray drying device performs spray drying of concentrated water from which salt content has been concentrated by the desalination device.

According to another preferred aspect of the present invention, there is provided the water treatment system according to claim 1, wherein the desalination device includes a membrane separating unit.

According to another preferred aspect of the present invention, there is provided the water treatment system according to claim 1, wherein the desalination device removes bivalent salt content present in the effluent.

According to another preferred aspect of the present invention, there is provided the water treatment system according to claim 1 wherein the flue gas treatment system includes a wet desulfurization device, and the spraying unit of the spray drying device has separator liquid, which is obtained by separating gypsum from the wet desulfurization device, introduced thereto and performs spray drying of the separator liquid along with the effluent.

According to another aspect of the present invention, there is provided a water treatment method including the features of claim 5.

According to another aspect of the present invention, there is provided the water treatment method according to claim 5, further comprising desalinating that includes removing salt content present in the effluent, wherein the spray-drying, by the spray drying device, includes performing spray drying of concentrated water from which salt content has been concentrated by the desalination device.

According to another preferred aspect of the present invention, there is provided the water treatment method according to claim 5, wherein the desalinating includes membrane-separating.

According to another preferred aspect of the present invention, there is provided the water treatment method according to claim 5, wherein the desalinating includes removing bivalent salt content present in the effluent.

According to another aspect of the present invention, there is provided the water treatment method according to claim 5, wherein the flue gas treatment system includes wet-desulfurizing, and the spray-drying has separator liquid, which is obtained by separating gypsum at the wet-desulfurizing, introduced thereat and includes performing spray drying of the separator liquid along with the effluent.

### Advantageous Effects of Invention

The present invention eliminates the need of performing treatment of effluent discharged in a plant facility by an industrial effluent treatment facility and can eliminate the need of draining the effluent generated in the plant or reduce the amount of effluent.

### Brief Description of Drawings

FIG. 1 is a schematic view illustrating a water treatment system according to a first embodiment for effluent generated in a plant facility.
FIG. 2 is a schematic view illustrating a water treatment system according to the first embodiment for effluent generated in another plant facility.
FIG. 3 is a schematic view illustrating a water treatment system according to the first embodiment for effluent generated in another plant facility.
FIG. 4 is a schematic view illustrating a spray drying device according to the first embodiment.
FIG. 5 is a schematic view illustrating a water treatment system according to a second embodiment for effluent generated in a plant facility.
FIG. 6 is a block diagram illustrating an example of a desalination device according to this embodiment.
FIG. 7 is a block diagram illustrating an example of another desalination device according to this embodiment.
FIG. 8 is a block diagram illustrating an example of another desalination device according to this embodiment.
FIG. 9 is a schematic view illustrating a water treatment system according to a third embodiment for effluent generated in a plant facility.
FIG. 10 is a schematic view illustrating a water treatment system according to the third embodiment for effluent generated in another plant facility.
FIG. 11 is a schematic view illustrating a water treatment system according to the third embodiment for effluent generated in another plant facility.
FIG. 12 is a schematic view illustrating a water treatment system according to the third embodiment for effluent generated in another plant facility.
FIG. 13 is a schematic view illustrating an example of a separating device which employs a cold lime method.
FIG. 14 is a photomicrograph of gypsum obtained by crystallization.
FIG. 15 is a photomicrograph of gypsum obtained by crystallization.
FIG. 16 is a view illustrating a result of a simulation of pH dependency on the amount of precipitation of gypsum.
FIG. 17 is a view illustrating a result of a simulation of pH dependency on the amount of precipitation of calcium carbonate.
FIG. 18 is a view illustrating a result of a simulation of pH dependency on the amount of precipitation of silica.
FIG. 19 is a schematic view illustrating a water treatment system according to a fourth embodiment for effluent generated in a plant facility.

### Description of Embodiments

Now, referring to the attached drawings, preferred embodiments of the present invention will be described in more detail below. Note that the present invention will not be limited by these embodiments, but may also include those that are made up of a combination of each of a plurality of embodiments, if any.

### [First Embodiment]

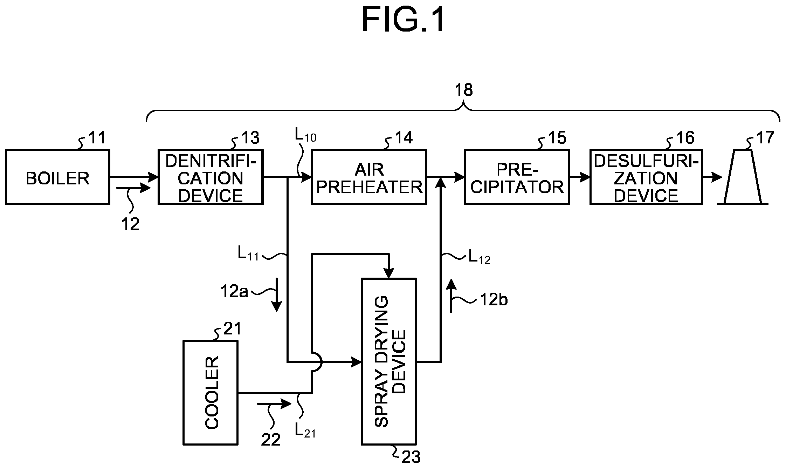

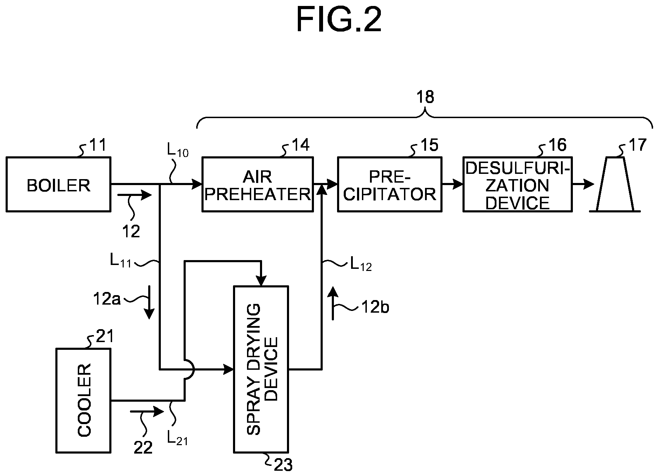

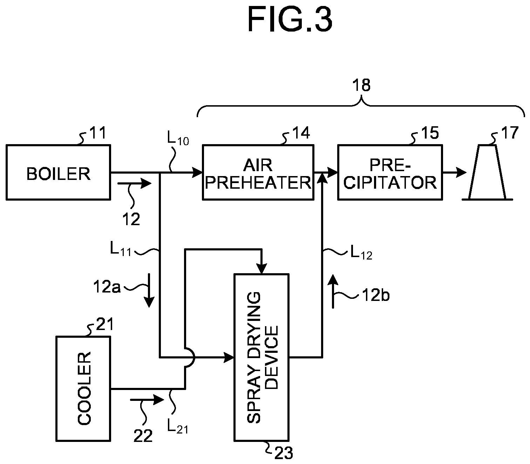

FIG. 1 is a schematic view illustrating a water treatment system according to a first embodiment for effluent generated in a plant facility. FIGS. 2 and 3 are schematic views illustrating a water treatment system according to the first embodiment for effluent generated in another plant facility.

As shown in FIG. 1, the water treatment system according to this embodiment for effluent generated in a plant facility includes: a flue gas treatment system 18 for performing treatment of a boiler flue gas (hereafter referred to as the "flue gas") 12 from a boiler 11; and a spray drying device 23 which has a spraying unit (not illustrated in FIG. 1) for spraying effluent 22 generated in the plant facility, for example, in a cooler 21 and which employs part 12a of the boiler flue gas 12 for spray drying.

The flue gas treatment system 18 illustrated in FIG. 1 removes, from the flue gas 12, hazardous substances such as nitrogen oxide (NOx), sulfur oxide (SOx), and mercury (Hg), for example, in the case of a coal combustion boiler which employs coal as fuel or a heavy-oil combustion boiler which employs heavy oil as fuel. The flue gas treatment system 18 includes: a denitrification device 13 for removing nitrogen oxide; an air preheater 14 for recovery of heat of the flue gas 12; a precipitator 15 for removing soot and dust in the flue gas 12 after the recovery of heat; a desulfurization device 16 for removing sulfur oxide contained in the flue gas 12 after the removal of dust; and a stack 17 for discharging a clean gas cleaned after desulfurization.

The spray drying device 23 includes a gas introduction unit for introducing part 12a of the flue gas 12 through a branch line L₁₁ branched from a flue gas line L₁₀ and a spraying unit for dispersing or spraying the effluent 22. Further, the heat of part 12a of the flue gas 12 being introduced is employed to vaporize and dry the effluent 22 which has been dispersed.

Furthermore, in this embodiment, part 12a of the flue gas 12 flowing into the air preheater 14 is branched from the flue gas line L₁₀ through the branch line L₁₁, so that the flue gas 12 is at a high temperature (350 to 400°C) and thus the effluent 22 can be sprayed and dried with efficiency. Note that flue gas 12b having contributed to drying is fed back through a gas feed line L₁₂ to the flue gas line L₁₀ between the air preheater 14 and the precipitator 15. Note that the flue gas 12b having contributed to drying may also be fed back to one of or a plurality of points upstream of the air preheater 14 or downstream of the precipitator 15.

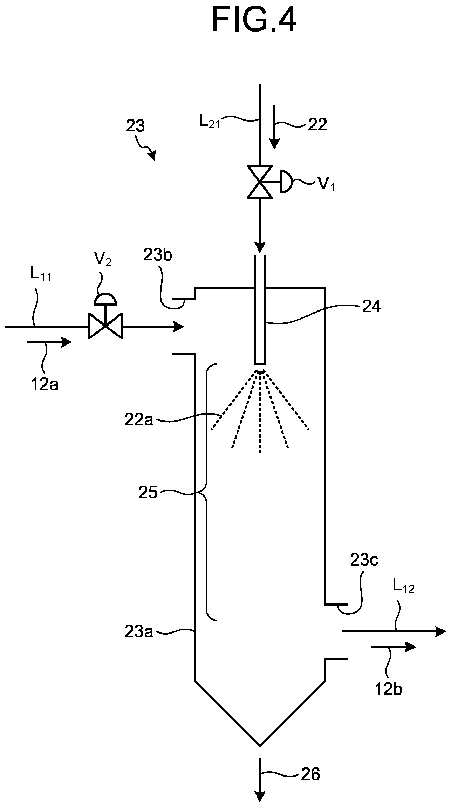

FIG. 4 is a schematic view illustrating the spray drying device according to the first embodiment. As shown in FIG. 4, the spray drying device 23 of this embodiment includes: a spray nozzle 24 for spraying, into a spray drying device main body 23a, the effluent 22 introduced from the cooler 21 through an introduction line L₂₁; an inlet port 23b which is provided on the spray drying device main body 23a so as to introduce part 12a of the flue gas 12 for drying a sprayed liquid 22a; a drying region 25 which is provided in the spray drying device main body 23a so as to dry the effluent 22 by part 12a of the flue gas 12; and a discharge outlet 23c for discharging the flue gas 12b having contributed to drying. Note that symbol 26 denotes a solid substance separated in the spray drying device main body 23a.

Here is shown an example of a balance between the gas amount of part 12a of the flue gas 12 introduced into the spray drying device 23 and the amount of a sprayed liquid of the effluent 22.

The temperature of the gas is lowered by 200°C when the spraying unit 24 sprays a liquid amount of 100kg/H of the effluent 22 per a gas amount of 1000m³/H of the part 12a of the flue gas 12 introduced.

Furthermore, the water concentration of the gas is increased by 10%. For example, when part 12a of the flue gas introduced before the spray has a water concentration of 9% in the gas, the flue gas 12b having contributed to drying will have a water concentration of 19% in the gas after the spraying, with the result of an increase of about 10%.

The gas temperature with a decrease of 200°C is generally equal to the temperature of the flue gas 12 after having passed through the air preheater 14.

However, since the bypass amount of the part 12a of the flue gas 12 into the spray drying device 23 is approximately about 5%, the bypassed gas 12b having contributed to drying has an increase in water content of about 0.5% (= 10%/20) when having been fed back to the flue gas line L₁₀.

Furthermore, the flue gas 12 passing through the flue gas line L₁₀ is reduced by 200°C in the gas temperature in the same manner because air is preheated in the air preheater 14 and then supplied to the boiler 11. Thus, the flue gas 12 will have no temperature difference when having been bypassed and returned. That is, when the gas temperature at the inlet to the air preheater 14 is 350°C, the gas that has passed through the air preheater 14 to have a reduced temperature and the flue gas 12b having contributed to drying in the spray drying device 23 through the branch line L₁₁ and the gas feed line L₁₂ are reduced by 200°C in the gas temperature in the same manner and thus have a generally equal temperature.

According to this embodiment, the effluent 22 discharged from the cooler 21 is introduced through the spray nozzle 24 into the spray drying device 23 in order to dry the sprayed liquid 22a by the heat of the part 12a of the flue gas 12. This eliminates the need of separately performing treatment of the effluent 22 in an industrial effluent treatment facility, thus eliminating the need of draining the effluent 22 generated in a plant.

In this embodiment, the blow drain from the cooler 21 has been described as an example of the effluent 22 generated in a plant facility. However, the present invention is not limited thereto, but may also be generally applied to effluent from a power generation plant or a chemical plant.

Here, examples of effluent in the coal thermal power plant or oil thermal power plant as the effluent generated regularly other than cooling water may include condensate desalination device recycled effluent, condensate desalination device pre-filter recycled effluent, cleansing filter recycled effluent, makeup water treatment device recycled effluent, analysis chamber miscellaneous effluent, desulfurization device effluent, miscellaneous effluent, sampling effluent, domestic effluent, ash disposal excess water, and coal unloading and transporting facility cleaning effluent. Examples of the irregular effluent other than the regularly generated effluent may include air preheater cleaning effluent, gas-gas heater (GGH) cleaning effluent, stack cleaning effluent, chemical cleaning effluent, start-up effluent, coal-storage yard effluent, coal unloading pier effluent, and effluent from tank yards. Furthermore, examples of cooling water may include, other than the cooler cooling water, bearing cooling water and steam condenser cooling water.

Here, the denitrification device 13 provided in the flue gas treatment system 18 of this embodiment is not indispensable. When the flue gas 12 from the boiler 11 has a trace concentration of nitrogen oxide or mercury or such substances are not contained in the flue gas 12, for example, the denitrification device 13 shown in FIG. 1 can be eliminated as in the system shown in FIG. 2.

Furthermore, the desulfurization device 16 provided in the flue gas treatment system 18 of this embodiment is not indispensable. When the flue gas 12 from the boiler 11 has a trace concentration of sulfur oxide or such a substance is not contained in the flue gas 12, for example, the desulfurization device 16 shown in FIG. 1 can be eliminated as in the system shown in FIG. 3.

Furthermore, the gas feed line L₁₂ for the flue gas 12b from the spray drying device 23 having contributed to drying may be fed back to upstream of the air preheater 14 when a temperature drop is not significant.

According to this embodiment, it is possible to efficiently perform treatment of various types of effluent at low costs without degradation in boiler efficiency, the effluent being generated in a process plant facility such as a power generation plant or a chemical plant.

### [Second Embodiment]

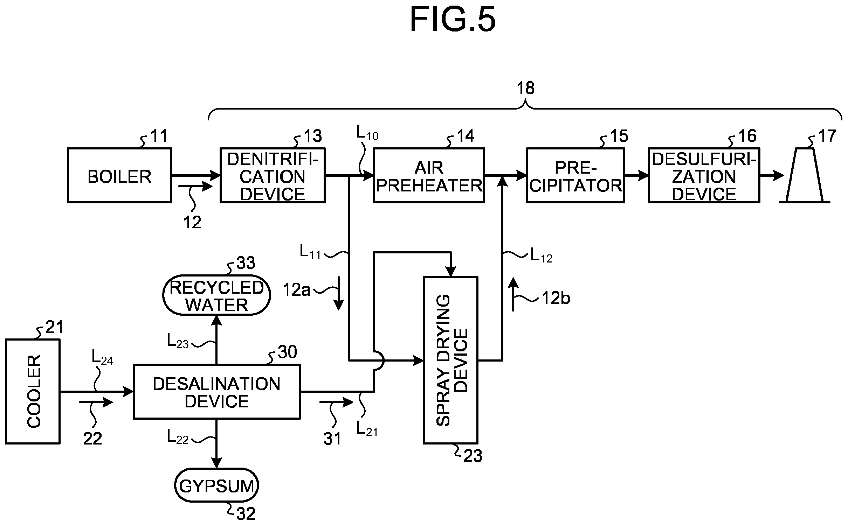

Now, a description will be made to a water treatment system according to a second embodiment for effluent generated in a plant facility. FIG. 5 is a schematic view illustrating the water treatment system for effluent generated in a plant facility. As shown in FIG. 5, the water treatment system according to this embodiment for effluent generated in a plant facility has a desalination device 30 to remove salt content present in the effluent 22 from the cooler 21. Then, the water treatment system draws concentrated water 31, which has been desalinated in a desalination device 30A, into the spray drying device 23 through the supply line L₂₁. Note that this embodiment may also include such a mode in which the denitrification device or the desulfurization device is not provided as in the flue gas treatment system 18 shown in FIGS. 2 and 3. In FIG. 5, symbol L₂₄ denotes an introduction line for introducing the effluent 22 into the desalination device 30A.

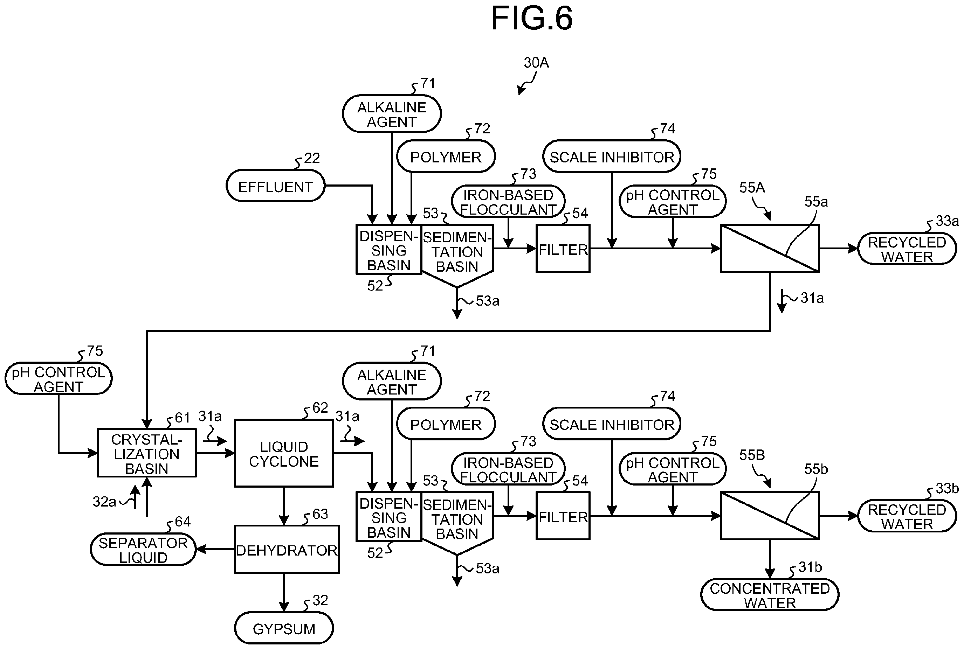

FIG. 6 is a block diagram illustrating an example of the desalination device according to this embodiment. As shown in FIG. 6, the desalination device 30A according to this embodiment includes: a scale inhibitor supply unit for supplying a scale inhibitor 74 to the effluent 22 containing bivalent ions such as Ca ions; a first desalination device 55A which is disposed downstream of the scale inhibitor supply unit and separates the effluent 22 into recycled water 33a and the concentrated water 31 into which the Ca ions or the like are concentrated; a crystallization basin 61 which is disposed downstream of the first desalination device 55A and supplies seed crystal gypsum 32a to the concentrated water 31 in the first desalination device 55A so as to crystallize the gypsum from concentrated water 31a from the first desalination device 55A; a liquid cyclone 62 serving as a separation unit to separate crystallized gypsum 32 from the concentrated water 31a from the first desalination device 55A; and a second desalination device 55B which is disposed downstream of a separation unit 62 and separates the concentrated water 31a into recycled water 33b and the concentrated water 31b into which the Ca ions or the like are concentrated.

In the embodiment shown in FIG. 6, the first desalination device 55A and the second desalination device 55B employ a reverse osmosis membrane device (RO) which has reverse osmosis membranes 55a and 55b, respectively. Instead of the reverse osmosis membrane device, it is also possible to employ, as appropriate, for example, a nano filtering film (NF), an electro-dialyzer (ED), a polarity reversible electro-dialyzer (EDR), an electro-deionization device (EDI), an ion-exchange resin device (IEx), a capacitive desalination device (CDl), or an evaporator.

The crystallization basin 61 includes the liquid cyclone 62 serving as a separation unit, and the separated gypsum 32 is dewatered by a dehydrator 63. Note that as a modified example of this embodiment, the liquid cyclone 62 or the separation unit can be eliminated. In this case, the bottom of the crystallization basin 61 and the dehydrator 63 are directly connected to each other.

The scale inhibitor 74 has a function of reducing the generation of a crystal nuclear in the effluent 22, and also a function of reducing crystal growth by causing it to be adsorbed to the surface of a crystal nuclear contained in the effluent 22 (seed crystals or reduced-diameter scales which are precipitated beyond the saturated concentration).

Furthermore, the scale inhibitor 74 also has a function of dispersing particles such as precipitated crystals in water (or to prevent aggregation). The scale inhibitor 74 is, for example, a phosphonic acid-based scale inhibitor, a poly-carboxylic acid-based scale inhibitor, or a mixture thereof. Examples of the scale inhibitor 74 may include "FLOCON 260 (trade name, manufactured by BWA)" although the present invention is not limited thereto.

This embodiment has a first pH control unit connected to introduce an acid or a pH control agent 75 after the scale inhibitor 74 is supplied to a flow path upstream of the first desalination device 55A. This embodiment also has a second pH control unit connected to introduce the acid or the pH control agent 75 into the crystallization basin 61. Alternatively, the second pH control unit may also be connected to introduce the acid or the pH control agent 75 into a line upstream of the crystallization basin 61.

In the water treatment system of this embodiment, there may be disposed a sedimentation basin 53 and a filter 54 upstream of the supply unit for the scale inhibitor 74. There may also be disposed an oxidation unit 51 upstream of the sedimentation basin 53 so as to supply air for oxidation.

Furthermore, in the same manner, the sedimentation basin 53 and the filter 54 are disposed between the liquid cyclone 62 and the second desalination device 55B. On a flow path between the filter 54 and the second desalination device 55B are disposed a third pH control unit for introducing the acid or the pH control agent 75.

Now, a description will be made to how to perform treatment of effluent or water to be treated using the water control system of the first embodiment.

Here, by way of example, the properties of the effluent 22 from the cooler 21 to be treated according to the present invention may include: a pH of 8, Na ions of 20 mg/L, K ions of 5 mg/L, Ca ions of 50 mg/L, Mg ions of 15 mg/L, HCO₃ ions of 200 mg/L, Cl ions of 200 mg/L, SO₄ ions of 120 mg/L, PO₄ ions of 5 mg/L, and SiO₂ ions of 35 mg/L, in which of these ions, the Ca ions, Mg ions, SO₄ ions, and HCO₃ ions have a high concentration, so that reactions in the presence thereof may lead to the generation of scales (such as CaSO₄ and CaCO₃).

### <Pretreating Step>

First, in the sedimentation basin 53 and the filter 54, metal ions in the effluent 22 are roughly removed as a metal hydroxide.

When the effluent 22 shows strong acidity, an alkaline agent (for example, Ca(OH)₂) 71 and a polymer (for example, anion based polymer (manufactured by MITSUBISHI HEAVY INDUSTRIES MECHATRONICS SYSTEMS, LTD., trade name: Hishifloc H₃O₅)) 72 are supplied to the effluent 22 in an adjacent dispensing basin 52 upstream of the sedimentation basin 53 so as to control the pH in the sedimentation basin 53 within an alkaline pH region (for example, a pH of 8.5 to 11).

In this pH region, calcium carbonate and metal hydroxides have a low solubility, so that when calcium carbonate and metal hydroxides become supersaturated, the calcium carbonate and the metal hydroxides are precipitated and then sedimented on the bottom of the sedimentation basin 53.

Furthermore, the solubility of the metal hydroxides depends on the pH. Metal ions have a higher solubility in a stronger acid water. Since many metal hydroxides have a low solubility within the aforementioned pH region, metals contained in the effluent 22 are sedimented as metal hydroxides on the bottom of the sedimentation basin 53. Here, sediments 53a are discharged separately from the bottom.

The effluent 22, which is a supernatant liquid in the sedimentation basin 53, is discharged from the sedimentation basin 53. An iron-based flocculant (for example, FeCl₃) 73 is added to the discharged effluent 22, so that solids such as calcium carbonate or metal hydroxides in the effluent 22 are flocculated as Fe(OH)₃.

The effluent 22 is fed to the filter 54. The filter 54 removes the solid to which Fe(OH)₃ has been flocculated.

Among metals, Fe is acidic and tends to be precipitated as a hydroxide. The effluent 22 which contains a large amount of Fe ions and flows into the first desalination device 55A will cause scales containing Fe to be generated in the first desalination device 55A and as well an iron hydroxide or the like to be sedimented in the crystallization basin 61. Thus, in this embodiment, by taking into account the prevention of generation of scales in the first desalination device 55A, treating conditions in the sedimentation basin 53 and the amount of FeCl₃ to be added and the like are set as appropriate so that the effluent 22 has an Fe ion concentration of 0.05 ppm or less after pretreating of alkali and before flowing into the first desalination device 55A. Note that the aforementioned pretreating can be eliminated depending on the water quality of the effluent 22.

### <Scale Inhibitor Supply Step>

In the supply unit for supplying the scale inhibitor 74, a predetermined amount of the scale inhibitor 74 is supplied from a tank (not shown) to the effluent 22. The control unit (not shown) provides control so that the concentration of the scale inhibitor 74 has a predetermined value that is set depending on the property of the effluent 22.

### <Second pH Control Step>

The supply unit of the pH control agent 75 for second pH control provides control so that the effluent 22 at the entrance of the first desalination device 55A has a pH value (for example, a pH of about 5.5) at which the scale inhibitor 74 reduces the precipitation of scales (gypsum and calcium carbonate) that contain Ca. Control is achieved by measuring the pH of the effluent 22 at the entrance of the first desalination device 55A.

Note that in a modified example which is not provided with the second pH control unit, the second pH control step is eliminated.

### <Upstream Separation Step>

The first desalination device 55A performs treatment of the effluent 22 of which pH has been controlled. The water having passed through the reverse osmosis membrane 55a of the first desalination device 55A is collected as the recycled water 33a from which salt content has been removed.

In the upstream separation step, the ions and the scale inhibitor 74 contained in the effluent 22 cannot pass through the reverse osmosis membrane 55a. Thus, the concentrated water 31a has a high ion concentration before passing through the reverse osmosis membrane 55a. The concentrated water 31a in the first desalination device 55A is fed toward the crystallization basin 61. For example, when another desalination device such as a capacitive desalination device is employed, the effluent 22 is separated into treated water and concentrated water of a high ion concentration.

### <First pH Control Step>

The control unit (not shown) provides control so that the concentrated water 31a from the first desalination device 55A in the crystallization basin 61 has a pH value at which the function of the scale inhibitor 74 is lowered and the gypsum in the concentrated water 31a can be precipitated (for example, a pH of 4 or less).

### <Crystallization Step>

The concentrated water 31a of which pH has been adjusted in the first pH control step is stored in the crystallization basin 61. When a seed crystal supply unit is disposed, the seed crystal supply unit adds a seed crystal or the seed crystal gypsum 32a to the concentrated water 31a in the crystallization basin 61.

In the first pH control step, the function of the scale inhibitor 74 is lowered in the crystallization basin 61. Thus, the gypsum supersaturated in the crystallization basin 61 is crystallized. When the seed crystal gypsum 32a is separately supplied as the seed crystal in the crystallization step, the crystal growth of the gypsum 32 occurs with the supplied seed crystal gypsum 32a as a nucleus.

Here, part of the gypsum 32 separated by the dehydrator 63 is employed as the seed crystal gypsum 32a.

When the seed crystal gypsum 32a is supplied, no adjustment is made to the pH by the addition of the pH control agent 75, so that the pH of a liquid passing through the first desalination device 55A may be on the alkaline side. In this case, the purity of the gypsum 32 is slightly lower than that when the acid 75 is added to adjust the pH. This is because the pH on the alkaline side causes the crystal of calcium carbonate (CaCO₃) to be generated. This causes the calcium carbonate (CaCO₃) to be mixed with the gypsum (CaSO₄) and thus the purity to be lowered.

As in this embodiment, in the first pH control step in which an acid is added as the pH control agent 75, the pH is controlled to a predetermined value and in the crystallization step, the seed crystal gypsum 32a is added, thereby allowing a high purity gypsum 32 low in water content to be precipitated.

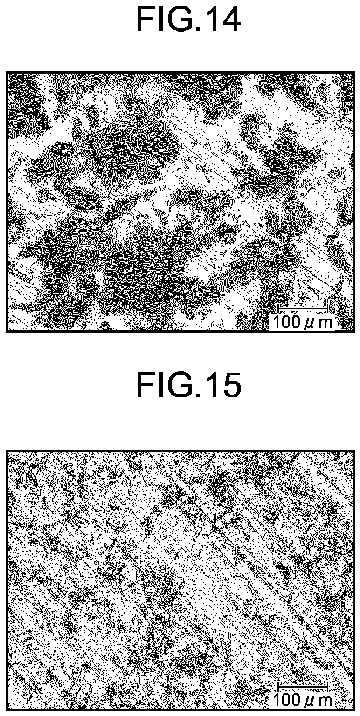

Here, FIGS. 14 and 15 each are a photomicrograph of gypsum obtained by crystallization. FIG. 14 shows an observation result under a condition with the seed crystal gypsum 32a or a seed crystal added. FIG. 15 shows an observation result under a condition with the seed crystal gypsum 32a or a seed crystal not added.

As shown in FIG. 14, when the seed crystal gypsum 32a is added, greater pieces of gypsum were precipitated. In general, the greater the precipitated gypsum, the lower the water content becomes. With an average grain size of 10 µm or more, preferably 20 µm or more, such gypsum of a sufficiently reduced water content can be obtained. Here, "the average grain size" used in the present invention is the grain size which is measured by the method (the laser diffraction method) that is specified in JlSZ8825.

From the results of FIGS. 14 and 15, the pH can be adjusted to a predetermined value in the first pH control step and then the seed crystal is added in the crystallization step, thereby allowing high purity gypsum low in water content to be precipitated. The greater the amount of added seed crystal (the higher the seed crystal concentration in the crystallization basin 61), the greater the speed of precipitation of the gypsum 32 becomes. The amount of the seed crystal or the seed crystal gypsum 32a added is set, as appropriate, on the basis of the residence time, the concentration of the scale inhibitor, and the pH in the crystallization basin 61.

Furthermore, the liquid cyclone 62 serving as a separation unit separates, from the concentrated water 31a, the gypsum 32 which has an average grain size of 10 µm or greater or preferably 20 µm or greater. Part of the gypsum 32 collected in the dehydrator 63 adjacent to the liquid cyclone 62 serving as a separation unit is stored in a seed crystal tank 65 through a seed crystal circulation unit (not shown). Part of the collected gypsum 32 is supplied from the seed crystal tank 65 to the crystallization basin 61.

Here, in the seed crystal tank 65, the stored gypsum 32 undergoes acid treatment. When the scale inhibitor 74 is adhered to the gypsum 32 separated in the dehydrator 63, the acid treatment lowers the function of the adhered scale inhibitor. Although the type of the acid used here is not limited to a particular one, sulfuric acid is the optimum one by taking into account the power saving of the second desalination device 55B.

The gypsum crystallized in the crystallization basin 61 has a broad grain size distribution. However, since grains of the gypsum 32 equal to or greater than 10 µm are separately collected from the concentrated water 31a in the liquid cyclone 62, those pieces of gypsum having greater grain sizes can be used as a seed crystal. If larger grains of seed crystal are available, then larger grains of gypsum can be crystallized in a greater amount. That is, it is possible to obtain high-quality gypsum with a high collection rate. Furthermore, larger grains of gypsum can be easily separated in the liquid cyclone 62, so that the liquid cyclone 62 can be reduced in size, and as well power can be saved. Larger grains of gypsum can be more easily dewatered in the dehydrator 63, so that the dehydrator 63 can be reduced in size and as well power can be saved.

Here, since the water treatment system of FIG. 6 is an open system other than the reverse osmosis membrane device, the effluent 22 and the concentrated water 31a are in contact with air, causing carbonate ions to be dissolved therein. However, as described above, in the first pH control step or the second pH control step, the effluent 22 or the concentrated water 31a is adjusted to be within a pH region where a high solubility of calcium carbonate is shown. In the preceding stage of the crystallization basin 61 or in the crystallization basin 61, carbonate ions in the concentrated water have been reduced, with the calcium carbonate at saturation solubility or less. Furthermore, since the addition of an acid as the pH control agent 75 provides a low pH region, the equilibrium equation in (1) below shows an environment of a lower carbonate ion concentration. This causes calcium carbonate to be maintained at a sufficiently low concentration in the crystallization basin 61 as compared with the saturated concentration, allowing no calcium carbonate to be crystallized. Thus, the collected gypsum 32 contains almost no calcium carbonate. This allows the gypsum 32 to have a high purity.

CO₂ + H_{2O} ↔ H₂CO₃ ↔ HCO₃⁻ + H⁺ ↔ CO₃²⁻ + 2H⁺ ... (1)

Furthermore, in the acid region, salt containing metal has a high solubility. Even when metal is left in the effluent 22 even after the pretreatment (the sedimentation basin 53), hydroxides containing metal will never be precipitated in the crystallization step if the pH of the concentrated water 31a in the first desalination device 55A is reduced in the first pH control step as described above. Furthermore, when the effluent 22 has a property of containing a large amount of Fe ions, the Fe concentration is reduced through the aforementioned pretreatment, and thus almost no hydroxide containing Fe(OH)₃ is sedimented in the crystallization basin 61.

As described above, the use of the water treatment method and the water treatment system of this embodiment make it possible to separately collect, as valuables, the high-purity gypsum 32 which contains almost no impurities such as calcium carbonate or metal hydroxides in the effluent 22 discharged from the cooler 21.

Here, when greater grains of gypsum 32 having an average grain size of 10 µm or greater, preferably 20 µm or greater, are crystallized, the crystallization speed is reduced in general and thus the residence time in the crystallization basin 61 is elongated. In this embodiment, the pH is adjusted so as to lower the function of the scale inhibitor 74, and the seed crystal concentration is increased to ensure an appropriate crystallization rate.

### <Collection Step>

The concentrated water 31a containing the gypsum 32 is discharged from the crystallization basin 61 and fed to the liquid cyclone 62 serving as a separation unit, allowing the gypsum 32 to be separated from the discharged concentrated water 31a. Grains of gypsum 32 having an average size of 10 µm or greater is settled on the bottom of the liquid cyclone 62, whereas grains of gypsum having a size less than 10 µm are left in the supernatant liquid. The gypsum 32 settled on the bottom of the liquid cyclone 62 is transferred to the dehydrator 63 and further dewatered and then collected. In the collection step, it is possible to separate and collect, at a high collection rate, the gypsum 32 which has a low water content and a high purity without containing any impurity. In this embodiment, since seed crystal is added for crystallization, grains of gypsum 32 having an average size of 10 µm or greater are mainly precipitated, so that those pieces of gypsum having reduced grain diameters are found at a low percentage. Here, separator liquid 64 separated in the dehydrator 63 may also be supplied to the spray drying device 23 for spray drying.

Furthermore, other than being supplied to the spray drying device 23 for spray drying, the separator liquid 64 may also be drawn into the discharged concentrated water 31a in the liquid cyclone 62 so as to be treated in the second desalination device 55B together with the concentrated water 31a.

When the liquid cyclone 62 serving as a separation unit is eliminated as a modified example of this embodiment, the concentrated water on the settlement side is discharged from the bottom of the crystallization basin 61. In the concentrated water on the bottom of the crystallization basin 61, larger crystallized grains of gypsum 32 are settled. If the concentrated water containing mainly greater grains of gypsum 32 can be dewatered in the dehydrator 63, the gypsum 32 of a high purity can be collected. Furthermore, since the gypsum 32 has a low water content, the dehydrator 63 does not need to increase its volume.

### <Downstream Separation Step>

The concentrated water 31a on the supernatant side discharged from the liquid cyclone 62 is fed to the sedimentation basin 53 and the filter 54. In the same steps as those of the sedimentation basin 53 and the filter 54 mentioned above, the gypsum 32 and calcium carbonate left in the concentrated water after the separation step and the metal hydroxides left in the concentrated water are removed.

The concentrated water 31a from the first desalination device 55A discharged from the filter 54 is fed to the second desalination device 55B. Before the concentrated water 31a in the first desalination device 55A is allowed to flow into the second desalination device 55B, the scale inhibitor 74 may also be additionally added thereto.

Furthermore, after the scale inhibitor 74 was added to the concentrated water 31a from the first desalination device 55A, the acid 75 may also be supplied thereto.

In the second desalination device 55B, the concentrated water 31a from the first desalination device 55A is treated. The water having passed through a reverse osmosis membrane 55b of the second desalination device 55B is collected as transmitted water or the recycled water 33b. The concentrated water 31b in the second desalination device 55B is discharged from the system.

The provision of the second desalination device 55B makes it possible to further collect the recycled water 33b from the concentrated water 31a on the supernatant liquid side after the gypsum 32 was crystallized. This allows for providing a further improved water collection rate.

The concentrated water 31a from the first desalination device 55A has a low ion concentration because the gypsum 32 has been removed by the treatment in the crystallization basin 61. Thus, it is possible for the second desalination device 55B to provide a reduced osmotic pressure when compared with the case in which the gypsum 32 is not removed, thus allowing required power to be saved.

Furthermore, it is also acceptable to provide an evaporator (not illustrated in FIG. 6). In the evaporator, water is vaporized from the concentrated water, and ions contained in the concentrated water are precipitated as a solid and then collected as a solid. Since the water is collected upstream of the evaporator to considerably reduce the amount of the concentrated water, the evaporator can be made compact and the energy required for vaporization can also be saved.

In this embodiment, employed as a desalination device is "the desalination/crystallization device" which includes: the first desalination device 55A for desalinating the effluent 22 after the scale inhibitor 74 was introduced in the effluent 22; the crystallization basin 61 for crystallizing the gypsum 32 after the first desalination device 55A; and the liquid cyclone 62 for separating the crystallized gypsum 32. However, the present invention is not limited thereto.

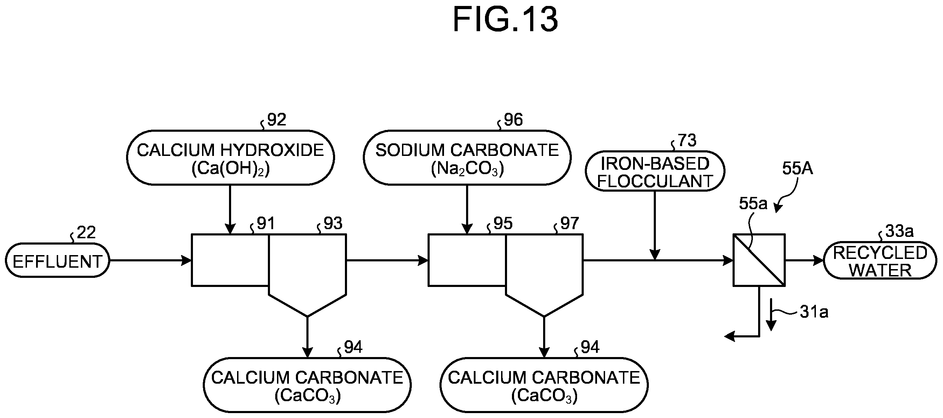

As a desalination device other than the "desalination/crystallization device" shown in FIG. 6, it may also be acceptable to employ, as another embodiment, a separating device which employs a cold lime method as shown in FIG. 13.

FIG. 13 schematically illustrates an example of a separating device which employs the cold lime method.

As shown in FIG. 13, the desalination device which employs the cold lime method adds calcium hydroxide (Ca(OH)₂) 92 to the effluent 22 in a dispensing basin 91 and allows calcium carbonate (CaCO₃) 94 to be settled in a sedimentation basin 93 and then removed.

Next, sodium carbonate (NaCO₃) 96 is added in a dispensing basin 95, and calcium carbonate (CaCO₃) 94 is settled in a sedimentation basin 97 and then removed.

Subsequently, an iron-based flocculant (for example, FeCl₃) 73 is added to flocculate suspended solids (for example, floating solid substances such as gypsum, silica, calcium carbonate, and magnesium hydroxide). Subsequently, like the operation shown in FIG. 6, the scale inhibitor 74 and the pH control agent 75 are introduced for membrane separation treatment when treatment is performed in the first desalination device 55A.

Other examples may include: an Optimized Pretreatment and Unique Separation (OPUS) method (provided by Veolia) in which after water to be treated is degassed and free oil is removed therefrom, chemical softening is performed to filter floating solid-state particles such as metals, and then a reverse osmosis membrane is used for treatment; and a High Efficiency Reverse Osmosis (HERO) method (provided by GE) in which water to be treated is treated by chemical softening or an ion-exchange resin to remove, for example, Ca and Mg, an acid is then added to adjust pHwo, a CO₂ gas is separated, then the pH is adjusted to alkali for ionization to prevent precipitation, and then a reverse osmosis membrane is used for treatment.

Furthermore, the first and second desalination devices 55A and 55B of this embodiment employ an "RO membrane" as the membrane separating unit. However, an "NF membrane" may also be used as a separation membrane.

When the NF membrane is used, like the RO membrane, bivalent ions can be removed, but monovalent ions cannot be completely removed. Thus, for example, the recycled water cannot be supplied as desulfurization makeup water to the desulfurization device and is preferably supplied, for example, to the cooler as feedwater. This is because the NF membrane cannot remove the scale inhibitor 74.

The water treatment system of this embodiment can efficiently separate bivalent metals (for example, calcium salt or magnesium salt), sulfuric acid ions, and carbonate ions, which are contained in the effluent 22. Furthermore, when the RO membrane is used, it is possible to remove barium salt and strontium salt in addition to calcium salt and magnesium salt.

According to this embodiment, it is possible to considerably increase the amount of effluent (before being concentrated) that can be sprayed and dried by concentrating the effluent 22 using the desalination device 30 as shown in FIG. 6. For example, the desalination crystallization device can be used to eliminate 20 times (= 100/(100 - 95)) the effluent to be drained if the collection rate of the recycled water is 95%.

Here, the desulfurization device 16 used in the flue gas treatment system 18 of this embodiment may be any one of the wet-type desulfurization device, the dry-type desulfurization device, and the semi-dry-type desulfurization device. However, to eliminate the need of draining the effluent, the dry-type desulfurization device may be preferably applied.

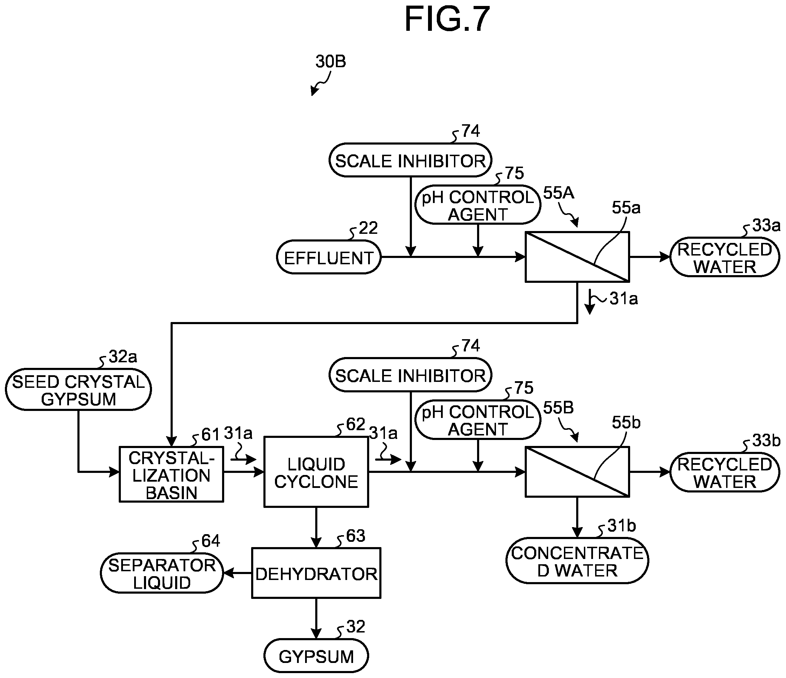

FIG. 7 is a block diagram illustrating an example of another desalination device according to this embodiment. In the desalination device 30A shown in FIG. 6, the oxidation unit 51, the sedimentation basin 53, and the filter 54 are disposed upstream of the first desalination device 55A to sediment and remove metal components and calcium components in the effluent 22 as metal hydroxides and calcium carbonate, respectively. However, the present invention may also be configured so as to eliminate the pretreatment.

As shown in FIG. 7, a desalination device 30B of this embodiment is provided with the first desalination device 55A, a crystallization basin 61, the liquid cyclone 62, and the second desalination device 55B, in which upstream of the first and second desalination devices 55A and 55B, the scale inhibitor 74 is added at each position so as to prevent the scale from being adhered to the membranes 55a and 55b of the first and second desalination devices 55A and 55B. Note that the pH control agent 75 to be added is an acid (for example, sulfuric acid) or an alkaline agent (such as sodium hydroxide).

Depending on the type of the effluent 22, the pretreatment is eliminated and the desalination device is constructed in a simplified manner.

Examples of the effluent 22 to be treated in such a simplified desalination device 30B may include effluent that has a low carbonate ion concentration. Furthermore, the simplified desalination device 30B may also be applied to effluent which has a low concentration of scale components such as Ca²⁺ or Mg²⁺.

Here, the pH control agent 75 to be used is an acid or an alkaline agent. Examples of an acid to be used to lower pH may include typical pH control agents such as hydrochloric acid, sulfuric acid, and citric acid. Furthermore, examples of an alkaline agent to increase pH may include typical pH control agents such as sodium hydroxide.

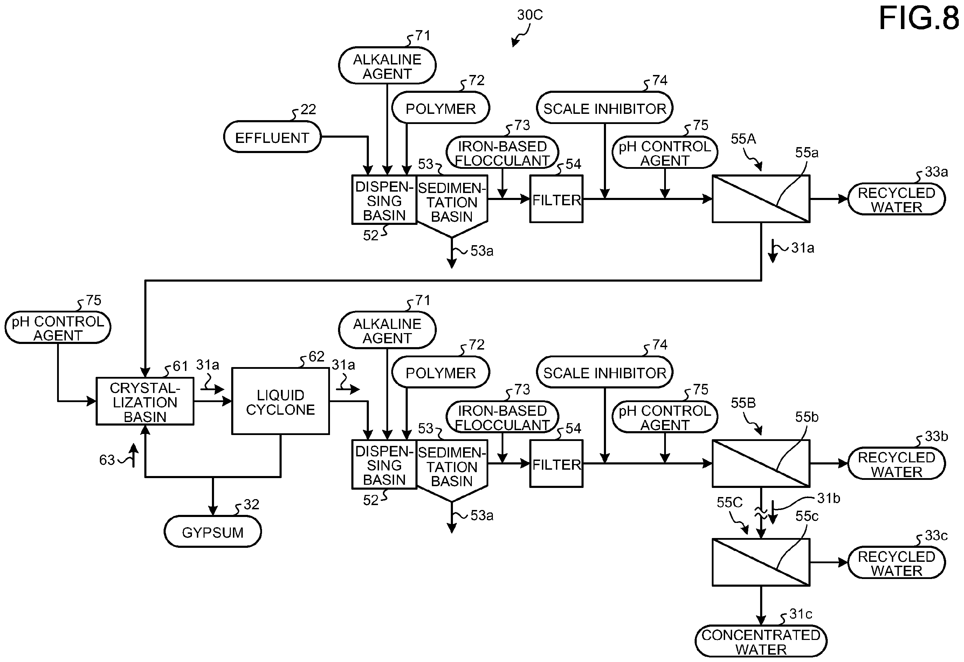

FIG. 8 is a block diagram illustrating an example of another desalination device according to this embodiment.

Furthermore, as with a desalination device 30C shown in FIG. 8, downstream of the concentrated water side of the second desalination device 55B, a third desalination device 55C may also be provided to provide three-stage desalination treatment.

Provision of the third desalination device 55C that includes a reverse osmosis membrane 55c will allow recycled water 33c to be further collected from the concentrated water 31b, thus providing an improved water collection rate of 97%. Note that between the second desalination device 55B and the third desalination device 55C are disposed the sedimentation basin 53, a pretreatment unit of the filter 54, and addition of the scale inhibitor 74 and the acid 75, as shown in FIG. 6, however, these components are not shown in FIG. 8.

### [Third Embodiment]

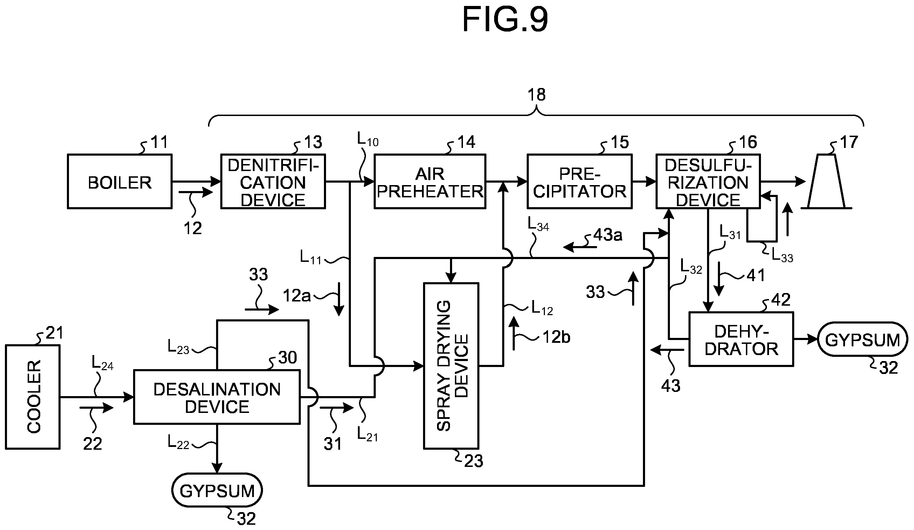

Now, a description will be made to a water treatment system according to a third embodiment for effluent generated in a plant facility. FIG. 9 is a schematic view illustrating the water treatment system for effluent generated in a plant facility. As shown in FIG. 9, the water treatment system according to this embodiment for effluent generated in a plant facility is provided with a wet-type desulfurization device as a desulfurization device of the flue gas treatment system 18, in which part 43a of a separated liquid 43 after the gypsum 32 was separated from desulfurization effluent 41 from the wet-type desulfurization device 16 is introduced through a supply line L₃₄ to the spray drying device 23.

In this embodiment, other than the effluent 22 from the cooler 21, part 43a of the separator liquid 43 for which the gypsum 32 has been separated from the desulfurization effluent 41 from the wet-type desulfurization device 16 that employs a limestone/gypsum method is also sprayed and dried in the spray drying device 23 so as to completely eliminate the need of draining the effluent in the plant.

In this embodiment, the wet-type desulfurization device 16 removes sulfur oxide in the flue gas 12 in a desulfurization method by the limestone/gypsum method. When the sulfur oxide is removed, limestone slurry is supplied, the gypsum 32 is separated in a dehydrator 42 from the gypsum slurry that is the desulfurization effluent 41 to be discharged through a discharge line L₃₁ from the desulfurization device 16, and the separator liquid 43 is fed back as makeup water through a return line L₃₂ to the desulfurization device 16. Note that symbol L₃₃ denotes a slurry circulation line through which the desulfurization gypsum slurry is circulated.

In this embodiment, part 43a of the separator liquid 43 is introduced through the supply line L₃₄ into the spray drying device 23 and then sprayed and dried together with the effluent 22 so as to eliminate the need of draining the effluent.

Furthermore, a recycled water 33 obtained by performing treatment of the effluent 22 in the desalination device 30 is joined through a recycled water supply line L₂₃ to the return line L₃₂, along which the separator liquid 43 is fed back to the desulfurization device 16, and is then used as makeup water for the gypsum slurry for use in the desulfurization device 16.

As described above, according to this embodiment, it is possible to eliminate the need of draining the desulfurization effluent 41 from the wet-type desulfurization device 16 as well as to obtain the recycled water 33 (33a, 33b) recovered in the desalination devices 55A and 55B using the desalination device 30, thereby reusing the same in the plant while reducing the amount of makeup water to the desulfurization device 16.

Here, the recycled water 33 can be reused in the plant, for example, as cooling water makeup water, desulfurization device makeup water, and boiler makeup water. However, the invention is not limited to these uses.

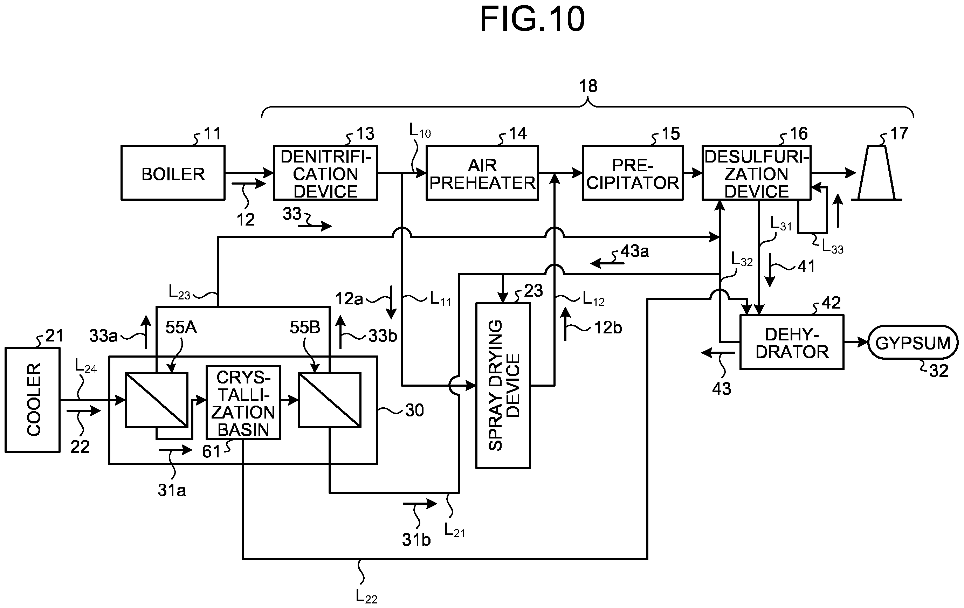

On the other hand, as shown in FIG. 10, the settled water that contains the settled gypsum 32 from the crystallization basin 61 in the desalination device 30 may be introduced through a supply line L₂₂ to the dehydrator 42, which separates the gypsum 32 from the desulfurization effluent 41 from the desulfurization device 16, so as to separate the gypsum 32 therein.

This can eliminate the provision of the dehydrator 63 which separates the settled liquid from the liquid cyclone 62 in the desalination device 30 shown in FIG. 6.

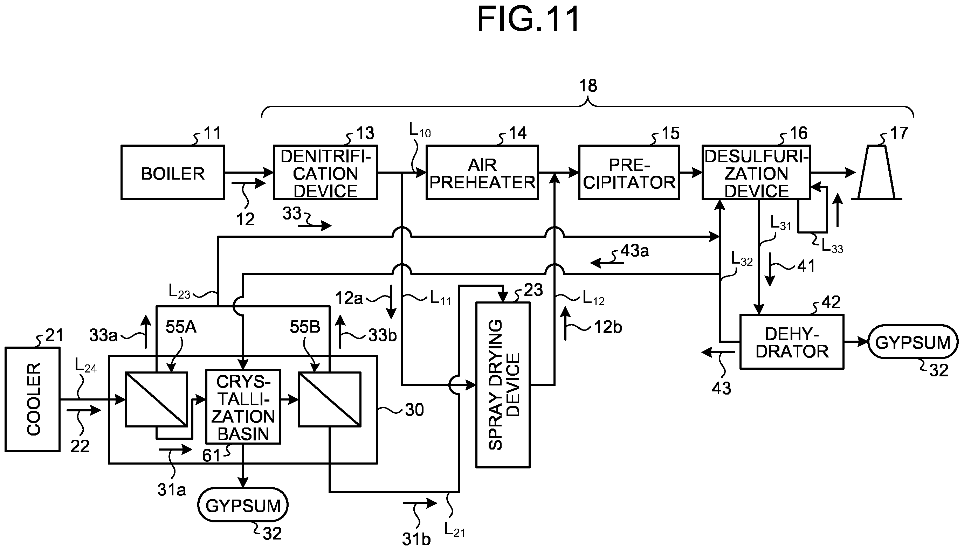

Furthermore, as shown in FIG. 11, a part 43a of the separated water 43 from the dehydrator 42 may be supplied to the crystallization basin 61 so as to settle the gypsum 32 in the crystallization basin 61, so that the gypsum 32 is separated from the concentrated water containing the gypsum 32 in the liquid cyclone 62 and the dehydrator 63 which are shown in FIG. 6.

This can actively separate the gypsum 32 from the separator liquid 43a of the desulfurization effluent 41 in the desalination device 30. As a result, it is possible to reduce the load of spray drying in the spray drying device 23.

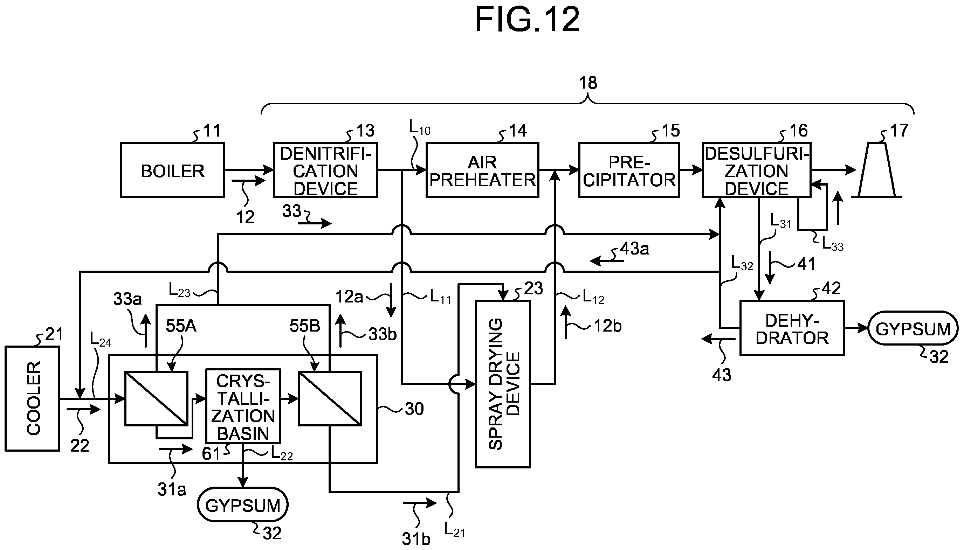

On the other hand, as shown in FIG. 12, part 43a of the separated water 43 from the dehydrator 42 may also be introduced into an introduction line L₂₄, through which the effluent 22 is drawn into the desalination device 30, so that the separated water from the desulfurization device 16 or part 43a of the separator liquid 43 containing the gypsum 32 is desalinated in the desalination device 30.

This can actively separate the gypsum 32 from the separator liquid 43a of the desulfurization effluent 41 in the desalination device 30. As a result, it is possible to reduce the load of spray drying in the spray drying device 23.

This can actively separate the gypsum 32 from the separator liquid 43a of the desulfurization effluent 41 in the desalination device 30. As a result, it is possible to reduce the load of spray drying in the spray drying device 23.

In the modified examples as shown in FIG. 11 and FIG. 12, it is possible to increase the amount of gypsum to be recovered. Furthermore, since the amount to be treated in the spray drying device 23 is reduced, the load of treatment can be reduced and an increase in the load on the precipitator 15 can be reduced as well. Thus, a considerable excess in the treatment capacity of the precipitator 15 can be avoided.

Here, for example, suppose that in a 110MW thermal power plant, the amount of supply water to be supplied to the cooler 21 is 7900 m³/d and the amount of the effluent 22 from the cooler 21 is 1200 m³/d. In this case, assuming that the collection rate of the recycled water 33 (33a, 33b, 33c) in the three-stage treating desalination device 30 shown in FIG. 8 is 97%, a liquid of 1164 m³/d is collected. To apply the collected recycled water 33 to the makeup water for the wet-type desulfurization device 16 in the flue gas treatment system 18 of the 110MW thermal power plant, a liquid amount of about 1000 m³/d is required, so that the recycled water 33 recycled in the desalination device 30 can cover all the amount that is required.

Furthermore, the liquid amounts of the concentrated water 31 and part 43a of the separated water 43 to be dried in the spray drying device 23 are 36 m³/d and 38 m³/d, respectively, thus eliminating the load on the spray drying device 23.

Furthermore, in this embodiment, the precipitation of silica in the effluent is not taken into account, and thus, to take into account the precipitation of silica, the following pH control step is preferably followed.

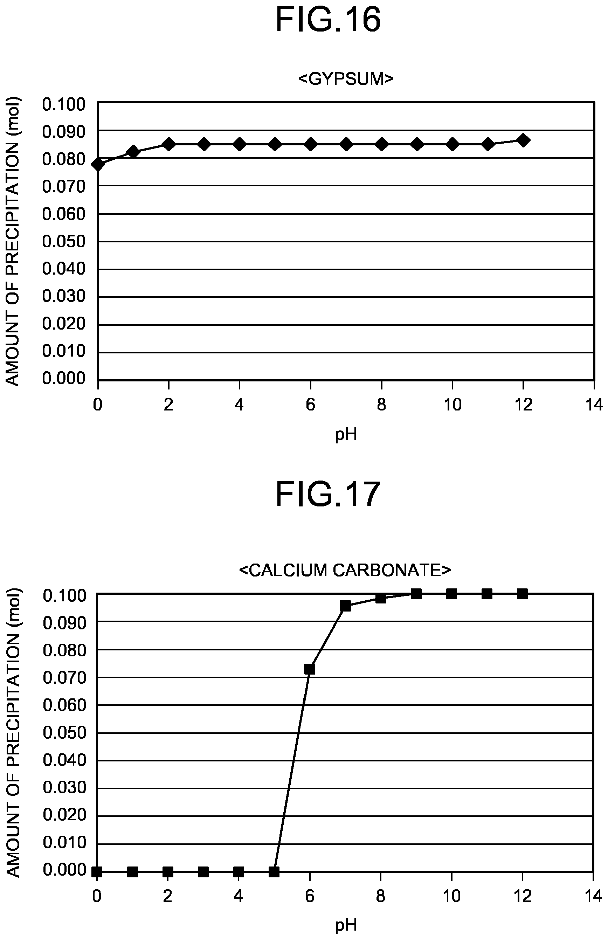

Here, with reference to FIGS. 16 to 18, a description will be made to the precipitation behavior of gypsum, silica, and calcium carbonate in the effluent 22.

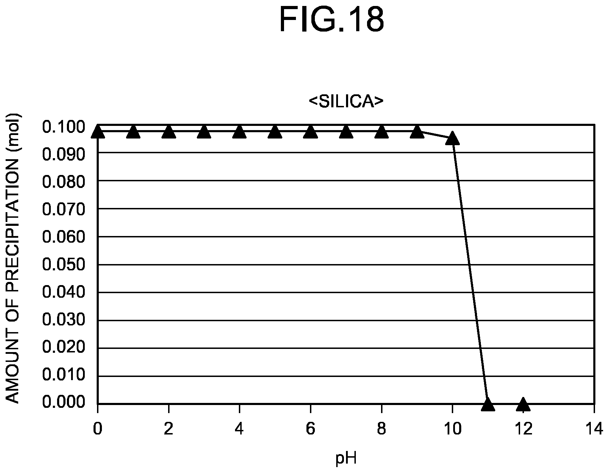

FIG. 16 shows a simulation result of the dependency of the amount of precipitation of gypsum on pH. FIG. 17 shows a simulation result of the dependency of the amount of precipitation of calcium carbonate on pH. FIG. 18 shows a simulation result of the dependency of the amount of precipitation of silica on pH. In these drawings, the horizontal axis represents pH and the vertical axis represents the respective amounts of precipitation (mol) of gypsum, calcium carbonate, and silica. The simulations were performed using a simulation software manufactured by OLI under the conditions that each solid-state component is mixed by 0.1 mol/L in the water, with H₂SO₄ added as an acid and Ca(OH)₂ added as an alkali.

From FIG. 16, it can be understood that the gypsum is precipitated independently on pH, and precipitated on the entire pH region. However, once the calcium scale inhibitor is added, gypsum is found to be dissolved in the water in the high pH region. From FIG. 17, calcium carbonate is precipitated at a pH exceeding 5. From FIG. 18, silica tends to be dissolved in the water at a pH of 10 or greater.

Thus, by taking into account the precipitation behavior of gypsum (calcium sulfate), silica, and calcium carbonate in the effluent 22, the first to third pH control will be provided as follows.

### 1) First pH Control (pH of 10 or greater)

The first pH control is provided to measure the pH of the effluent 22 upstream of the first desalination device 55A with a pH meter (not shown) in order to control the pH value to be 10 or greater.

This is done because as shown in FIG. 18, silica is dissolved at a pH of 10 or greater.

In the case of the first pH control, supplied is such an amount of the scale inhibitor (calcium scale inhibitor) 74 that is enough to inhibit the adherence of gypsum and calcium carbonate (substances to be adhered) to the membrane 55a.

### 2) Second pH Control (pH of 10 or less)

The second pH control is provided to measure the pH of the effluent 22 upstream of the first desalination device 55A with a pH meter (not shown) in order to control the pH value to be 10 or less.

This is done because as shown in FIG. 18, silica is precipitated at a pH of 10 or less.

In the case of the second pH control, supplied is such an amount of the scale inhibitor 74 that is enough to inhibit the adherence of all of gypsum, calcium carbonate, and silica (substances to be adhered) to the membrane 55a.

Here, the scale inhibitors 74 to be used for silica include two types of inhibitors: a calcium scale inhibitor, and an inhibitor (referred to as "a silica scale inhibitor") for preventing silica from being precipitated as scales in the water to be treated. The silica scale inhibitor to be employed may include, for example, a poly-carboxylic acid-based scale inhibitor and a mixture thereof. A specific example may include FLOCON260 (trade name, manufactured by BWA).

### 3) Third pH Control (pH of 6.5 or less)

The third pH control is provided to measure the pH of the effluent 22 upstream of the first desalination device 55A with a pH meter (not shown) in order to control the pH value to be 6.5 or less.

This is done because as shown in FIG. 17, calcium carbonate is dissolved at a pH of 6.5 or less.

In the case of the third pH control, supplied is such an amount of the scale inhibitor (calcium scale inhibitor or silica scale inhibitor) 74 that is enough to inhibit the adherence of gypsum and silica (substances to be adhered) to the membrane 55a.

Table 1 collectively shows the first to third pH control.

**Table 1**

| | pH | | |
|---|---|---|---|
| | 10 or greater | 10 to 6.5 | 6.5 or less |
| Gypsum | ○ | ○ | ○ |
| Calcium carbonate | ○ | ○ | × |
| Silica | × | ○ | ○ |

| | | | |
|---|---|---|---|
| ×:Dissolved (Absence of scale inhibitor) ○:Precipitated (Presence of scale inhibitor) | | | |

As shown in Table 1, in the case of a pH of 10 or greater, the scale inhibitor (calcium scale inhibitor) 74 is supplied in order to inhibit scales of gypsum and calcium carbonate (circle in the Table), whereas the scale inhibitor is not required to be supplied because silica is dissolved (cross in the Table).

Furthermore, in the case of a pH of 6.5 to 10 inclusive, the scale inhibitor (calcium scale inhibitor and silica scale inhibitor) 74 is supplied in order to inhibit the scales of all of gypsum, calcium carbonate, and silica (circle in the Table).

Furthermore, for a pH of 6.5 or less, the scale inhibitor (the calcium scale inhibitor, the silica scale inhibitor) 74 is supplied in order to inhibit the scales of gypsum and silica (circle in the Table), whereas since calcium carbonate is dissolved, a less amount of calcium scale inhibitor is supplied than that in the case of the second pH control because scales of only gypsum have to be prevented (cross in the Table).

If the concentration of silica in the first concentrated water 31a after having been concentrated in the first desalination device 55A is equal to or greater than a predetermined concentration, then the performance of the silica scale inhibitor is limited. In this context, with a silica concentration being a predetermined concentration (for example, 200 mg/L) or less, the second and third pH control steps should be performed, whereas with a silica concentration being the predetermined concentration (for example, 200 mg/L) or greater, the first pH control step (dissolving of silica) should be preferably performed.

This can allow desalination treatment to be performed while preventing precipitation of silica to the membrane when a large amount of silica components are found in the effluent 22.

### [Fourth Embodiment]

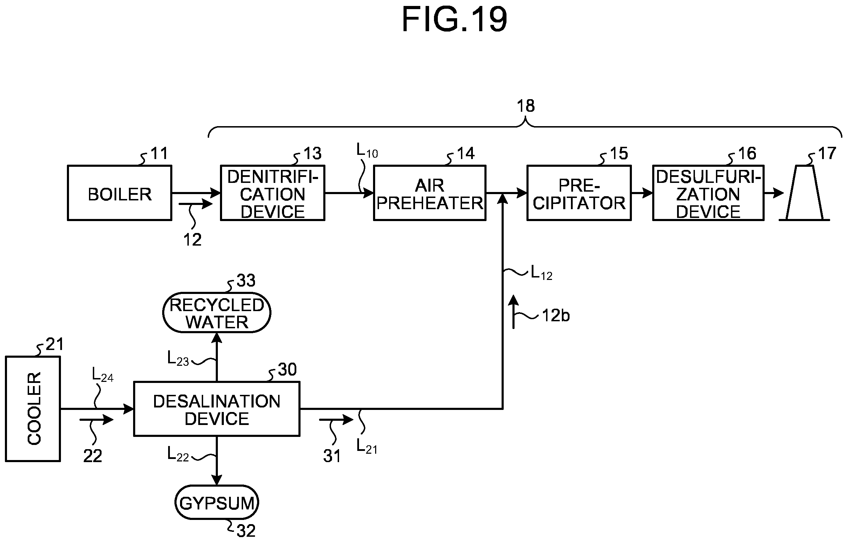

Now, a description will be made to a water treatment system according to a fourth embodiment for effluent generated in a plant facility. FIG. 19 is a schematic view illustrating the water treatment system for effluent generated in a plant facility. As shown in FIG. 19, the water treatment system according to this embodiment for effluent generated in a plant facility is the same as the water treatment system shown in FIG. 5 according to the second embodiment for effluent generated in a plant facility except that, instead of the concentrated water 31 concentrated in the desalination device 30 being sprayed and dried in the spray drying device 23, the concentrated water 31 is supplied through the introduction line L₂₁ into between the air preheater 14 and the precipitator 15 disposed into the flue gas line L₁₀ through which the flue gas 12 is discharged from the boiler 11. And, the concentrated water 31 introduced into the flue gas line L₁₀ is sprayed and dried using all the amount of the flue gas 12. Note that the desalination device to be used may be any one of the desalination devices 30A to 30C shown in FIG. 6 to FIG. 8, and thus will not be repeatedly explained.

Although the spray drying device 23 needs to be separately provided in the water treatment system according to the second embodiment for effluent generated in a plant facility, the spray drying device 23 is not required to be provided in this embodiment. Thus, for example, when the space for accommodating the spray drying device 23 in the plant cannot be ensured, all the amount of the flue gas 12 can be used to spray and dry the concentrated water 31, thereby eliminating the need of draining the effluent. Furthermore, the costs for providing the spray drying device 23 can be saved.

### Reference Signs List

- 11: boiler
- 12: boiler flue gas (flue gas)
- 18: flue gas treatment system
- 21: cooler
- 22: effluent
- 23: spray drying device
- 30: desalination device
- 31 (31a to 31c): concentrated water
- 33 (33a to 33c): recycled water
- 55a to 55c: first to third desalination devices
- 61: crystallization basin
- 62: liquid cyclone
- 74: scale inhibitor
- 75 pH: control agent

## Claims

1. A water treatment system comprising:
a flue gas treatment system (18) that performs treatment of boiler flue gas (12);
a scale inhibitor supply unit (74) which is configured to supply a scale inhibitor (74) to an effluent (22) generated in a plant facility containing Ca ions;
a first desalination device (55A) which is disposed downstream of the scale inhibitor supply unit (74) and is configured to separate the effluent (22) into recycled water (33a) and concentrated water (31a) in which Ca ions are concentrated;
a crystallization basin (61) which is disposed downstream of the first desalination device (55A) and is configured to crystallize gypsum (32) from the concentrated water (31a);
a separation unit (62) which is configured to separate the crystallized gypsum (32) from the concentrated water (31a) from the first desalination device (55A);
a second desalination device (55B) which is disposed downstream of the separation unit (62) and is configured to separate the concentrated water (31a) into recycled water (33b) and concentrated water (31b) in which ions are concentrated;
a spray drying device (23) that includes a spraying unit (24), which is configured to perform spay drying of the concentrated water (31), using some of the boiler flue gas.

2. The water treatment system according to claim 1, wherein the desalination device (55A, 55B) includes a membrane separating unit.

3. The water treatment system according to claim 1, wherein the desalination device (55A, 55B) removes bivalent salt content present in the effluent (22).

4. The water treatment system according to claim 1 or 2, wherein
the flue gas treatment system includes a wet desulfurization device (16), and
the spraying unit (24) of the spray drying device (23) has separator liquid (43), which is obtained by separating gypsum (32) from the wet desulfurization device (16), introduced thereto and performs spray drying of the separator liquid along with the effluent (22).

5. A water treatment method comprising:
flue gas-treating that includes performing treatment of boiler flue gas; and
supplying a scale inhibitor (74) to an effluent (22) generated in a plant facility containing Ca ions;
desalinating by separating the effluent (22) into recycled water (33a) and concentrated water (31a) in which Ca ions are concentrated;
crystallizing gypsum (32) from the concentrated water (31a);
separating the crystallized gypsum (32) from the concentrated water (31a);
desalinating by separating the concentrated water (31a) into recycled water (33b) and concentrated water (31b) in which Ca ions are concentrated;
spray-drying the concentrated water (31b), using some of the boiler flue gas.

6. The water treatment method according to claim 5, wherein the desalinating includes membrane-separating.

7. The water treatment method according to claim 5, wherein the desalinating includes removing bivalent salt content present in the effluent (22).

8. The water treatment method according to claim 5, wherein
the flue gas-treating includes wet-desulfurizing, and
the spray-drying (43) has separator liquid, which is obtained by separating gypsum (32) at the wet-desulfurizing, introduced thereat and includes performing spray drying of the separator liquid (43) along with the effluent (22).

## Patentansprüche

1. Wasserbehandlungssystem, umfassend:
ein Abgasbehandlungssystem (18), das eine Behandlung von Kesselabgas (12) durchführt;
eine Kesselsteininhibitor-Versorgungseinheit (74), die derart ausgestaltet ist, um einen Kesselsteininhibitor (74) zu einem Abwasser (22), das in einer Anlageneinrichtung erzeugt wird und Ca-Ionen enthält, zuzuführen;
eine erste Entsalzungsvorrichtung (55A), die stromabwärts von der Kesselsteininhibitor-Versorgungseinheit (74) angeordnet ist und derart ausgestaltet ist, um das Abwasser (22) in recyceltes Wasser (33a) und konzentriertes Wasser (31a), in dem Ca-Ionen konzentriert sind, zu trennen;
ein Kristallisationsbecken (61), das stromabwärts der ersten Entsalzungsvorrichtung (55A) angeordnet ist und derart ausgestaltet ist, um Gips (32) aus dem konzentrierten Wasser (31a) zu kristallisieren;
eine Trenneinheit (62), die derart ausgestaltet ist, um den kristallisierten Gips (32) von dem konzentrierten Wasser (31a) aus der ersten Entsalzungsvorrichtung (55A) zu trennen;
eine zweite Entsalzungsvorrichtung (55B), die stromabwärts der Trenneinheit (62) angeordnet ist und derart ausgestaltet ist, um das konzentrierte Wasser (31a) in recyceltes Wasser (33b) und konzentriertes Wasser (31b), in dem Ionen konzentriert sind, zu trennen;
eine Sprühtrocknungsvorrichtung (23), die eine Sprüheinheit (24) aufweist, die derart ausgestaltet ist, um Sprühtrocknen des konzentrierten Wassers (31) unter Verwendung von einem Teil des Kesselabgases durchzuführen.

2. Wasserbehandlungssystem nach Anspruch 1, wobei die Entsalzungsvorrichtung (55A, 55B) eine Membrantrenneinheit aufweist.

3. Wasserbehandlungssystem nach Anspruch 1, wobei die Entsalzungsvorrichtung (55A, 55B) vorhandenen Gehalt an zweiwertigem Salz im Abwasser (22) entfernt.

4. Wasserbehandlungssystem nach Anspruch 1 oder 2, wobei das Abgasbehandlungssystem (18) eine Nassentschwefelungsvorrichtung (16) umfasst und
die Sprüheinheit (24) der Sprühtrocknungsvorrichtung (23) eine darin eingebrachte Separatorflüssigkeit (43) aufweist, die durch Abtrennen von Gips (32) von der Nassentschwefelungsvorrichtung (16) erhalten wird, und Sprühtrocknen der Separatorflüssigkeit zusammen mit dem Abwasser (22) durchführt.

5. Wasserbehandlungsverfahren, umfassend:
Abgasbehandeln, das die Durchführung einer Behandlung von Kesselabgas einschließt; und
Zuführen eines Kesselsteininhibitors (74) zu einem Abwasser (22), das in einer Anlageneinrichtung erzeugt wird und Ca-Ionen enthält;
Entsalzen durch Trennen des Abwassers (22) in recyceltes Wasser (33a) und konzentriertes Wasser (31a), in dem Ca-Ionen konzentriert sind;
Kristallisieren von Gips (32) aus dem konzentrierten Wasser (31a);
Trennen des kristallisierten Gipses (32) von dem konzentrierten Wasser (31a);
Entsalzen durch Trennen des konzentrierten Wassers (31a) in recyceltes Wasser (33b) und konzentriertes Wasser (31b), in dem Ca-Ionen konzentriert sind;
Sprühtrocknen des konzentrierten Wassers (31b) unter Verwendung eines Teils des Kesselabgases.

6. Wasserbehandlungsverfahren nach Anspruch 5, wobei das Entsalzen ein Membrantrennen einschließt.

7. Wasserbehandlungsverfahren nach Anspruch 5, wobei das Entsalzen ein Entfernen vorhandenen Gehalt an zweiwertigem Salz im Abwasser (22) einschließt.

8. Wasserbehandlungsverfahren nach Anspruch 5, wobei das Abgasbehandeln ein Nassentschwefeln einschließt und das Sprühtrocknen (43) eine darin eingebrachte Separatorflüssigkeit aufweist, die durch Abtrennen von Gips (32) bei der Nassentschwefelung erhalten wird, und Durchführen des Sprühtrocknens der Separatorflüssigkeit (43) zusammen mit dem Abwasser (22) beinhaltet.

## Revendications

1. Système de traitement d'eau comprenant :
un système de traitement de gaz de combustion (18) qui réalise un traitement de gaz de combustion de chaudière (12) ;
une unité d'alimentation en antitartre (74) qui est configurée pour alimenter en antitartre (74) un effluent généré dans une installation d'usine contenant des ions Ca ;
un premier dispositif de désalinisation (55A) qui est disposé en aval de l'unité d'alimentation en antitartre (74) et est configuré pour séparer l'effluent (22) en eau recyclée (33a) et en eau concentrée (31a) dans laquelle des ions Ca sont concentrés ;
une cuve de cristallisation (61) qui est disposée en aval du premier dispositif de désalinisation (55A) et est configurée pour cristalliser le gypse (32) provenant de l'eau concentrée (31a) ;
une unité de séparation (62) qui est configurée pour séparer le gypse cristallisé (32) provenant de l'eau concentrée (31a) du premier dispositif de désalinisation (55A) ;
un second dispositif de désalinisation (55B) qui est disposé en aval de l'unité de séparation (62) et est configuré pour séparer l'eau concentrée (31a) en eau recyclée (33b) et en eau concentrée (31b) dans laquelle des ions sont concentrés ;
un dispositif de dessiccation par pulvérisation (23) qui inclut une unité de pulvérisation (24), qui est configuré pour réaliser une dessiccation par pulvérisation de l'eau concentrée (31), en utilisant une partie du gaz de combustion de chaudière.

2. Système de traitement d'eau selon la revendication 1, dans lequel le dispositif de désalinisation (55A, 55B) inclut une unité de séparation de membrane.

3. Système de traitement d'eau selon la revendication 1, dans lequel le dispositif de désalinisation (55A, 55B) retire le contenu en sel bivalent présent dans l'effluent (22).

4. Système de traitement d'eau selon la revendication 1 ou 2, dans lequel le système de traitement de gaz de combustion inclut un dispositif de désulfurisation humide (16), et
l'unité de pulvérisation (24) du dispositif de dessiccation par pulvérisation (23) a un liquide séparateur (43), qui est obtenu en séparant le gypse (32) du dispositif de désulfurisation humide (16), introduit dans celui-ci et réalise une dessiccation par pulvérisation du liquide séparateur conjointement avec l'effluent (22).

5. Procédé de traitement d'eau comprenant :
un traitement de gaz de combustion qui inclut la réalisation d'un traitement de gaz de combustion de chaudière ; et
l'alimentation en antitartre (74) d'un effluent (22) généré dans une installation d'usine contenant des ions Ca ;
la désalinisation en séparant l'effluent (22) en eau recyclée (33a) et en eau concentrée (31a) dans laquelle des ions Ca sont concentrés ;
la cristallisation de gypse (32) provenant de l'eau concentrée (31a) ;
la séparation du gypse cristallisé (32) provenant de l'eau concentrée (31a) ;
la désalinisation en séparant l'eau concentrée (31a) en eau recyclée (33b) et en eau concentrée (31b) dans laquelle des ions Ca sont concentrés ;
la dessiccation par pulvérisation de l'eau concentrée (31b), en utilisant une partie du gaz de combustion de chaudière.

6. Procédé de traitement d'eau selon la revendication 5, dans lequel la désalinisation inclut une séparation de membrane.

7. Procédé de traitement d'eau selon la revendication 5, dans lequel la désalinisation inclut le retrait du contenu en sel bivalent présent dans l'effluent (22).

8. Procédé de traitement d'eau selon la revendication 5, dans lequel
le traitement de gaz de combustion inclut une désulfurisation humide, et la dessiccation par pulvérisation (43) a un liquide séparateur, qui est obtenu en séparant le gypse (32) au moment de la désulfurisation humide, introduit dans celui-ci et inclut la réalisation de la dessiccation par pulvérisation du liquide séparateur (43) conjointement avec l'effluent (22).
